# EUROPEAN PATENT APPLICATION

(11) **EP 2 894 896 A1**
(43) Date of publication of application: **15.07.2015**
(21) Application number: 13837520.9
(22) Date of filing: 03.09.2013
(51) Int. Cl.: H04W 24/04

(54) **METHOD AND SYSTEM FOR ACQUIRING BASE STATION ENGINEERING INFORMATION**

(30) Priority: 12.09.2012 CN 201210336389
(71) Applicant: ZTE Corporation, Shenzhen, Guangdong 518057 (CN)
(72) Inventor: LI, Huashan, Shenzhen Guangdong 518057 (CN)
(74) Representative: Gevers Patents
(86) International application number: PCT/CN2013/082884
(87) International publication number: WO 2014/040509

(57) **Abstract**

A method and a system for acquiring BTS engineering information are provided. The method includes that a measurement tool acquires BTS engineering information and cell number information of a measured cell, and transmits the acquired information to a BTS engineering information server; the BTS engineering information server searches for the corresponding cell according to the cell number information, and updates data of the found cell according to the BTS engineering information. With the method and the system, the BTS engineering information can be automatically measured better.

## Description

### TECHNICAL FIELD

The disclosure relates to the field of electronic information, in particular to a method and a system for automatically acquiring and updating Base Transceiver Station (BTS) engineering information.

### BACKGROUND

BTS engineering information is basic engineering information of a wireless network, and is needed in the planning and optimization of the wireless network. The accuracy of the BTS engineering information directly influences the accuracy of the results of neighbour planning, neighbour optimization, drive test data analysis and the like.

The BTS engineering information is basic data of the wireless network, and is needed in coverage analysis, call drop analysis, handover analysis and the like in construction and maintenance stages of the wireless network. For example, when a person analyzes a call setup failure due to poor coverage, it is necessary to know the engineering information such as the latitude, longitude and azimuth angle of the BTS where the mobile phone is located, and the accuracy of the engineering information may directly influence an analysis result. Network adjustment based on a wrong analysis result is extremely likely to degrade the network performance.

At present, BTS engineering information is acquired by a tower worker having measurement skills. The BTS engineering information includes the latitude, longitude, height, azimuth angle, mechanical downtilt, electrical downtilt and beamwidth of an antenna. The electrical downtilt may be acquired from the network management system, the antenna beamwidth is determined by the antenna type, and the tower worker can measure the electrical downtilt and beamwidth of an antenna without climbing up a tower; the latitude, longitude, height, azimuth angle and mechanical downtilt are needed to be measured by a handheld Global Positioning System (GPS), a compass and a protractor respectively.

Since a lot of pieces of equipment are needed, a measurer should be familiar with each measurement tool, so requirements on the skills of the measurer are higher.

In addition, BTS engineering information is an important asset of an operator, and must be kept confidential, and no operator wants the amount and distribution of BTSs to be leaked. There exists a great leakage risk in the current measurement manner because measurement results are first stored in a paper file or a personal computer.

Moreover, the current measurement manner may cause a measurement error. For example, one BTS usually includes multiple cells, and the cells are usually numbered clockwise from the true north as 0, 1, 2, ... in order in the industry. The serial numbers are determined when the network is constructed, and are required to be associated one to one with cell numbers on the network management system. However, the azimuth angle of an antenna may be adjusted during network maintenance, for example, the original azimuth angle of Cell 0 is 10 degrees, and may be adjusted anticlockwise by 30 degrees to 340 degrees, and then the measurer is extremely likely to start numbering by taking Cell 1 as Cell 0.

### SUMMARY

The embodiments of the disclosure provide a method and a system for acquiring BTS engineering information, so as to automatically measure BTS engineering information better.

According to one aspect of the embodiments of the disclosure, a method for acquiring BTS engineering information is provided, which includes that:
base station engineering information and cell number information of a measured cell are acquired with the aid of a measurement tool, and are transmitted to a BTS engineering information server; and
the BTS engineering information server searches for a corresponding cell according to the cell number information, and updates data of the found cell with the BTS engineering information.

In one embodiment, the BTS engineering information may include an azimuth angle, mechanical downtilt, latitude, longitude and height of an antenna.

In one embodiment, the azimuth angle, mechanical downtilt, latitude, longitude and height of the antenna may be measured with the aid of an electronic compass, an electronic gradienter and a GPS in the measurement tool respectively.

In one embodiment, the measurement tool may obtain the cell number information by parsing a measurement command of a network management system or by demodulating an air interface message transmitted/received by the antenna.

In one embodiment, the measurement tool may gather the acquired azimuth angle, mechanical downtilt, latitude, longitude, height and cell number information, and transmit the gathered information to the BTS engineering information server.

In one embodiment, the method may further include that:
the measurement tool transmits its number information to the BTS engineering information server; and
the BTS engineering information server inquires a measurement tool information sheet according to the number information of the measurement tool, so as to determine whether the measurement tool has been authorized or not.

According to the other aspect of the embodiments of the disclosure, a system for acquiring BTS engineering information is provided, which includes:
a measurement tool, configured to collect BTS engineering information and cell number information of a measured cell, and to transmit the acquired information to a BTS engineering information server; and
the BTS engineering information server, configured to search for a corresponding cell according to the cell number information, and to update data of the found cell according to the BTS engineering information.

In one embodiment, the measurement tool may include:
a BTS engineering information acquisition unit, configured to measure the azimuth angle, mechanical downtilt, latitude, longitude and height of an antenna with the aid of an electronic compass, an electronic gradienter and a GPS respectively;
a cell number acquisition unit, configured to obtain the cell number information by parsing a measurement command of a network management system or by demodulating an air interface message transmitted/received by the antenna;
a measurement result gathering unit, configured to gather the acquired BTS engineering information and cell number information; and
a communication unit, configured to transmit the gathered information and number information of the measurement tool to the BTS engineering information server.

In one embodiment, the BTS engineering information server may include:
a cell matching unit, configured to search for the corresponding cell according to the cell number information;
a communication unit, configured to receive number information of the measurement tool and gathered information comprising the BTS engineering information and the cell number information from the measurement tool;
a BTS engineering information sheet updating unit, configured to update the data of the found cell according to the BTS engineering information; and
a storage unit, configured to store the BTS engineering information of the measured cell.

In one embodiment, the BTS engineering information server may further include:
a measurement tool validity determination unit, configured to inquire a measurement tool information sheet according to the number information of the measurement tool from the measurement tool to determine whether the measurement tool has been authorized or not.

Compared with the related art, the embodiments of the disclosure have the beneficial effects that:
BTS engineering information is acquired automatically by a measurement tool, and transmitted to a BTS engineering information server for updating, which avoids the use of multiple pieces of measurement equipment, and thus reduces the risk of BTS engineering information leakage and the risk of cell mismatching.

### BRIEF DESCRIPTION OF THE DRAWINGS

Fig. 1 is a flowchart of a method for acquiring BTS engineering information according to an embodiment of the disclosure;
Fig. 2 is a structure diagram of a measurement tool according to an embodiment of the disclosure;
Fig. 3 is a structure diagram of a BTS engineering information server according to an embodiment of the disclosure; and
Fig. 4 is a flowchart of data processing according to an embodiment of the disclosure.

### DETAILED DESCRIPTION

The embodiments of the disclosure are described below with reference to the drawings in detail. It should be understood that the embodiments described hereinafter are only adopted to describe and explain the disclosure and not intended to limit the disclosure.

The embodiments of the disclosure are intended to automatically collect an azimuth angle, mechanical downtilt, latitude, longitude and height of an antenna and cell information corresponding to the antenna with the aid of a measurement tool and transmit measurement results to a BTS engineering information server for automatic updating.

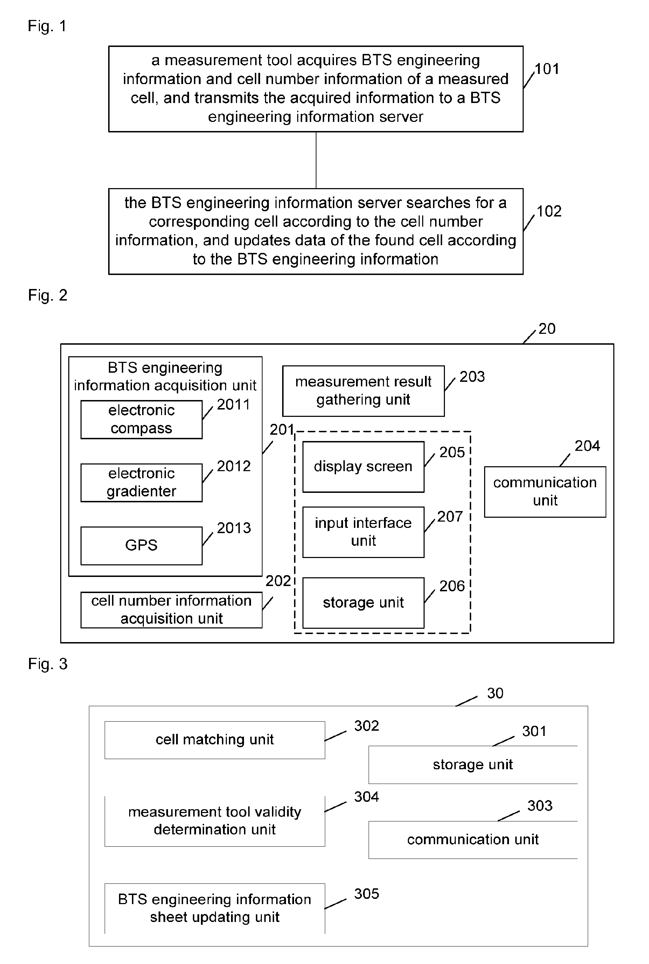

Fig. 1 is a flowchart of a method for acquiring BTS engineering information according to an embodiment of the disclosure, and as shown in Fig. 1, the method includes that:
step 101: a measurement tool acquires BTS engineering information and cell number information of a measured cell, and transmits the acquired information to a BTS engineering information server;
the BTS engineering information includes an azimuth angle, mechanical downtilt, latitude, longitude and height of an antenna, wherein the azimuth angle, mechanical downtilt, latitude, longitude and height of the antenna are measured with the aid of an electronic compass, an electronic gradienter and a GPS in the measurement tool respectively;
a cell number acquisition unit in the measurement tool acquires the cell number information by parsing a measurement command of a network management system or by demodulating an air interface message transmitted/received by the antenna;
the measurement tool gathers the acquired azimuth angle, mechanical downtilt, latitude, longitude, height and cell number information, and transmits the gathered information and number information of the measurement tool to the BTS engineering information server; and
step 102: the BTS engineering information server searches for the corresponding cell according to the cell number information, and updates data of the found cell according to the BTS engineering information;
the BTS engineering information server inquires a measurement tool information sheet according to the number information of the measurement tool, and then determines that the measurement tool has been authorized if the measurement tool is found. Then, the BTS engineering information server searches for a BTS engineering information sheet according to the cell number information, and updates BTS engineering information of the measured cell in the BTS engineering information sheet according to the BTS engineering information reported by the measurement tool if the BTS engineering information sheet is found.

With a Code Division Multiple Access (CDMA) network as an example, a process of automatically acquiring and updating BTS engineering information with the aid of a measurement tool is described below in detail.

In this embodiment, a measured cell is in a normal state, moreover, the information of the measured cell can be found in a BTS engineering information server; the measurement tool is valid, which may be independent equipment or may integrate all of its functions into an antenna; the BTS engineering information server is integrated into a network management system.

The measurement tool launches testing, starts acquiring BTS engineering information and cell number information, then gathers the acquired information, and transmits the gathered information and the number information of the measurement tool to the BTS engineering information server.

The BTS engineering information server judges whether the measurement tool is valid or not according to the number information of the measurement tool, finds a corresponding cell according to the cell number information if the measurement tool has been authorized, and updates the BTS engineering information of the cell according to the reported BTS engineering information.

Fig. 2 is a structure diagram of a measurement tool according to an embodiment of the disclosure, and as shown in Fig. 2, the measurement tool 20 is configured to collect BTS engineering information and cell number information of a measured cell, and transmit the acquired information to a BTS engineering information server. The measurement tool 20 includes a BTS engineering information acquisition unit 201, a cell number acquisition unit 202, a measurement result gathering unit 203 and a communication unit 204.

The BTS engineering information acquisition unit 201 includes an electronic compass 2011 configured to collect an azimuth angle of an antenna, an electronic gradienter 2012 configured to collect a mechanical downtilt of the antenna and a GPS 2013 configured to collect a latitude, longitude and height of the antenna.

The cell number information acquisition unit 202 is configured to obtain the cell number information by parsing a measurement command of a network management system or by demodulating an air interface message transmitted/received by the antenna.

The measurement result gathering unit 203 is configured to gather the acquired BTS engineering information and cell number information.

The communication unit 204 is configured to transmit the gathered information and number information of the measurement tool to the BTS engineering information server.

The measurement tool 20 may further include a display screen 205 configured to display data, a storage unit 206 configured to store the BTS engineering information and the cell number information, and an input interface unit 207 (such as a physical button) configured to input an external command.

Fig. 3 is a structure diagram of a BTS engineering information server according to an embodiment of the disclosure, and as shown in Fig. 3, the BTS engineering information server 30 includes a storage unit 301, a cell matching unit 302, a communication unit 303, a measurement tool validity determination unit 304 and a BTS engineering information sheet updating unit 305.

The storage unit 301 is configured to store BTS engineering information of a cell, and is also configured to store measurement tool information.

The cell matching unit 302 is configured to search for the corresponding cell according to the cell number information, namely search the storage unit for the corresponding cell with the aid of the cell number information fed back by a measurement tool.

The communication unit 303 is configured to receive number information of the measurement tool and gathered information including the BTS engineering information and the cell number information from the measurement tool, that is, the interaction between the communication unit and measurement tool can be implemented through a short message or an Internet Protocol (IP) network.

The measurement tool validity determination unit 304 is configured to inquire a measurement tool information sheet according to the number information of the measurement tool from the measurement tool. If the measurement tool exists and is authorized, it is regarded that the measurement tool is valid; otherwise, it is regarded that the measurement tool is invalid.

The BTS engineering information sheet updating unit 305 is configured to update data of the measured cell according to the BTS engineering information. Furthermore, the BTS engineering information sheet updating unit inquires the BTS engineering information sheet about the cell according to the reported cell number information of the measured cell, and updates information of the cell in the BTS engineering information sheet according to the reported BTS engineering information if the cell exists.

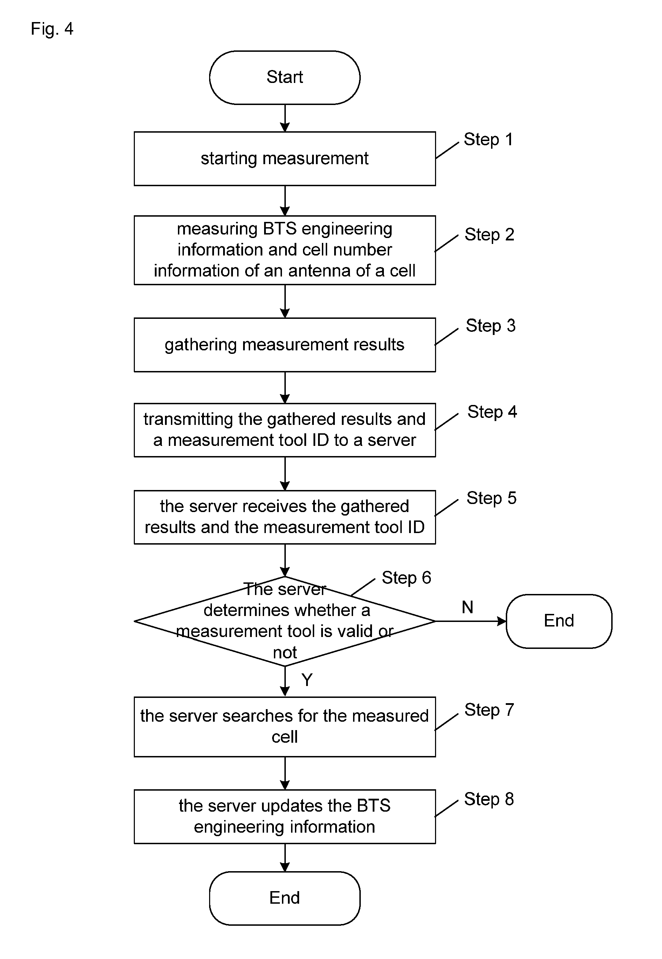

Fig. 4 is a flowchart of data processing according to an embodiment of the disclosure, and the embodiment of the disclosure is introduced below with reference to Fig. 4.

### Embodiment 1

When a measurement tool in the embodiment of the disclosure is integrated into an antenna, as shown in Fig. 4, the procedure of BTS engineering information acquisition in the embodiment of the disclosure is as follows:
step 1: the measurement is started;
step 2: a measurement tool starts acquiring BTS engineering information and cell number information of the antenna of a cell;
the BTS engineering information includes an azimuth angle, mechanical downtilt, latitude, longitude and height of the antenna, wherein the azimuth angle is acquired by an electronic compass, the mechanical downtilt is acquired by an electronic gradienter, and the latitude, the longitude and the height are acquired by a GPS;
the cell number information can be acquired from the network management system. A mapping relationship between the antenna and the cell has been configured when the cell is configured in the network management system, so the cell number information can be acquired from a measurement command of the network management system;
step 3: the measurement tool gathers measurement results, namely gathers the BTS engineering information and the cell number information;
step 4: the measurement tool transmits the gathered information and the number information of the measurement tool (measurement tool Identifier (ID)) to a BTS engineering information server;
step 5: the BTS engineering information server receives the gathered information and the measurement tool ID;
step 6: the BTS engineering information server judges the validity of the measurement tool according to the measurement tool ID. If the measurement tool is invalid, the flow is ended; otherwise, the following steps are continued;
step 7: the BTS engineering information server goes to match the measured cell according to the cell number information; and
step 8: the BTS engineering information server updates the BTS engineering information of the measured cell.

How to automatically collect and update the BTS engineering information with the aid of the measurement tool is introduced below with reference to the scheme in embodiment 1.

The measurement tool is integrated into an antenna, and the BTS engineering information server is integrated into the network management system; since a configuration module in the network management system has configured the mapping relationship between an antenna and a cell, the measurement tool in the antenna corresponding to the cell can be adopted for measurement when a certain cell in the network management system is selected to transmit a measurement command, and then the measurement results can be returned via short message.

The measurement is started, and the measurement tool starts acquiring BTS engineering information and cell number information, wherein the cell number information is the cell number information in the measurement command. After all the information above is acquired, the measurement tool gathers all acquired results. Then, the measurement results are returned to the BTS engineering information server. The BTS engineering information server determines that the measurement tool is valid according to the number information of the measurement tool, finds the corresponding cell according to the cell number information submitted by the measurement tool, and updates information of the cell according to the BTS engineering information submitted by the measurement tool.

### Embodiment 2

When a measurement tool in the embodiment of the disclosure is an independent tool, as shown in Fig. 4, the procedure of BTS engineering information acquisition in the embodiment of the disclosure is as follows:
step 1: the measurement tool is closely attached to the front surface of a tested antenna, and the direction of the measurement tool is consistent with that of the antenna, that is, the measurement tool and the tested antenna are required to be closely attached to each other, and the azimuth angle and downtilt of the measurement tool are required to be consistent with those of the tested antenna; then the test is started;
step 2: the measurement tool starts acquiring BTS engineering information and cell number information of the antenna of a cell;
the BTS engineering information includes the azimuth angle, mechanical downtilt, latitude, longitude and height of the antenna;
the azimuth angle: when the measurement tool is closely attached to the antenna, the direction of the measurement tool is consistent with that of the antenna, so the azimuth angle acquired by an electronic compass of the measurement tool is equal to that of the antenna;
the mechanical downtilt: the measurement tool is closely attached to the antenna, and the downtilt of the measurement tool is consistent with that of the antenna, so the downtilt acquired by an electronic gradienter of the measurement tool is equal to the mechanical downtilt of the antenna; and
the latitude and longitude of the antenna: the measurement tool is closely attached to the antenna, so the latitude, longitude and height acquired by a GPS in the measurement tool can be considered as those of the antenna;
the cell number information is demodulated from an air interface message. Since the measurement tool is on the front surface of the antenna, the cell number information read from the air interface message by the measurement tool is the cell number of the cell if the cell where the antenna is located is in a normal state. For example, in a CDMA network, the cell number is a BASE_ID parameter in a CDMA air interface message, and the parameter is unique under a Mobile Switching Centre (MSC), and has a one-to-one mapping relationship with the cell;
step 3: the measurement tool gathers measurement results, namely, the BTS engineering information and cell number information;
step 4: the measurement tool transmits the gathered information and the number information of the measurement tool (measurement tool ID) to a BTS engineering information server;
step 5: the BTS engineering information server receives the gathered information and the measurement tool ID;
step 6: the BTS engineering information server judges the validity of the measurement tool according to the measurement tool ID. If the measurement tool is invalid, the flow is ended; otherwise, the following steps are continued;
step 7: the BTS engineering information server searches for the corresponding cell according to the cell number information; and
step 8: the BTS engineering information server updates the BTS engineering information of the measured cell according to the BTS engineering information reported by the measurement tool.

Particularly, when the measured cell has not been commissioned or is in an out-of-work state, the measurement tool cannot receive a radio signal from the measured cell, that is, the cell number information demodulated from the air interface message by the measurement tool is inconsistent with that of the measured cell. Therefore, one prerequisite of the second scheme is that the measured cell is in a normal service state.

How to automatically collect and update the BTS engineering information with the aid of the measurement tool is introduced below with reference to the scheme in embodiment 2.

In the embodiment, the measured cell is a CDMA cell in a normal state, all functions of the measurement tool are integrated into a smart phone, a 3rd-Generation (3G) network is adopted for communication between the measurement tool and the BTS engineering information server, and the measurement tool is valid.

The measurement phone is closely attached to the front surface of the antenna, the direction of the measurement phone is consistent with that of the antenna, and then the measurement is started.

The measurement phone starts acquiring the BTS engineering information and the cell number information, wherein a cell number is a BASE_ID parameter in the CDMA air interface message, and the parameter is unique under the MSC, and has a one-to-one mapping relationship with the cell.

After all the above information is acquired, the measurement tool gathers all the acquired results, and produces a sound to prompt the measurer that the acquisition has been finished. Then the gathered measurement results and the measurement tool ID are returned to the BTS engineering information server through the 3G network.

The BTS engineering information server determines that the measurement tool is valid according to the number information of the measurement tool, finds the corresponding cell according to the cell number information submitted by the measurement tool, and updates information of the cell according to the BTS engineering information submitted by the measurement tool.

To sum up, the embodiments of the disclosure have the technical effects that:
1: automatic measurement is realized, so requirements on the skills of the measurer are lowered;
2: it is unnecessary to manually record any information in the process of measurement, so the risk of a BTS engineering information leakage is lowered; and
3: the system automatically goes to match the measured cell, so the risk of mismatching the measurement results and the measured cell can be effectively lowered.

Although the disclosure is described above in detail, that is not all. Those skilled in the art can make various modifications according to the principle of the disclosure. Therefore, those modifications made according to the principle of the disclosure shall fall within the scope of protection of the disclosure.

## Claims

1. A method for acquiring Base Transceiver Station (BTS) engineering information, comprising:
acquiring, with the aid of a measurement tool, BTS engineering information and cell number information of a measured cell, and transmitting the acquired information to a BTS engineering information server; and
searching for, by the BTS engineering information server, a corresponding cell according to the cell number information, and updating data of the found cell according to the BTS engineering information.

2. The method according to claim 1, wherein the BTS engineering information comprises an azimuth angle, mechanical downtilt, latitude, longitude and height of an antenna.

3. The method according to claim 2, wherein acquiring the BTS engineering information of the measured cell comprises:
measuring the azimuth angle, mechanical downtilt, latitude, longitude and height of the antenna respectively with the aid of an electronic compass, an electronic gradienter and a Global Positioning System (GPS) in the measurement tool.

4. The method according to claim 1, wherein acquiring the cell number information of the measured cell comprises:
obtaining, by the measurement tool, the cell number information by parsing a measurement command of a network management system or by demodulating an air interface message transmitted/received by the antenna.

5. The method according to any one of claims 1 to 4, wherein transmitting the acquired information to the BTS engineering information server comprises:
gathering, by the measurement tool, acquired azimuth angle, mechanical downtilt, latitude, longitude, height and cell number information, and transmitting the gathered information to the BTS engineering information server.

6. The method according to claim 5, further comprising:
transmitting, by the measurement tool, number information of the measurement tool to the BTS engineering information server; and
inquiring, by the BTS engineering information server, a measurement tool information sheet according to the number information of the measurement tool to determine whether the measurement tool has been authorized or not.

7. A system for measuring and acquiring Base Transceiver Station (BTS) engineering information, comprising:
a measurement tool, configured to collect BTS engineering information and cell number information of a measured cell, and to transmit the acquired information to a BTS engineering information server; and
the BTS engineering information server, configured to search for a corresponding cell according to the cell number information, and to update data of the found cell according to the BTS engineering information.

8. The system according to claim 7, wherein the measurement tool comprises:
a BTS engineering information acquisition unit, configured to measure an azimuth angle, mechanical downtilt, latitude, longitude and height of an antenna with the aid of an electronic compass, an electronic gradienter and a Global Positioning System (GPS) respectively;
a cell number acquisition unit, configured to obtain the cell number information by parsing a measurement command of a network management system or by demodulating an air interface message transmitted/received by the antenna;
a measurement result gathering unit, configured to gather the acquired BTS engineering information and cell number information; and
a communication unit, configured to transmit the gathered information and number information of the measurement tool to the BTS engineering information server.

9. The system according to claim 7, wherein the BTS engineering information server comprises:
a cell matching unit, configured to search for the corresponding cell according to the cell number information;
a communication unit, configured to receive number information of the measurement tool and gathered information comprising the BTS engineering information and the cell number information from the measurement tool;
a BTS engineering information sheet updating unit, configured to update data of the found cell with the BTS engineering information; and
a storage unit, configured to store the BTS engineering information of the measured cell.

10. The system according to claim 9, wherein the BTS engineering information server further comprises:
a measurement tool validity determination unit, configured to inquire a measurement tool information sheet according to the number information of the measurement tool from the measurement tool to determine whether the measurement tool has been authorized or not.
